# EUROPEAN PATENT APPLICATION

(11) **EP 4 491 364 A1**
(43) Date of publication of application: **15.01.2025**
(21) Application number: 23185482.9
(22) Date of filing: 14.07.2023
(51) Int. Cl.: B29B 17/02, B07C 5/342, B29K 105/04

(54) **METHOD AND PRE-PROCESSING ARRANGEMENT FOR PRE-PROCESSING A FOAM MIX FOR FEEDING A REACTOR**

(71) Applicant: BASF SE, 67056 Ludwigshafen am Rhein (DE)
(72) Inventor: Hinrichs, Matthias, 67056 Ludwigshafen am Rhein (DE); Stammer, Achim, 67056 Ludwigshafen am Rhein (DE); Schork, Nicolas Stefan, 67056 Ludwigshafen am Rhein (DE); Aggarwal, Anant Vikas, 67056 Ludwigshafen am Rhein (DE); Pikhard, Oliver, 67056 Ludwigshafen am Rhein (DE); Schmatz-Engert, Patrick, 67056 Ludwigshafen am Rhein (DE); Weiss, Patrick, 67056 Ludwigshafen am Rhein (DE); Haedler, Andreas Thomas, 67056 Ludwigshafen am Rhein (DE); Binder, Martin, 67056 Ludwigshafen am Rhein (DE); Anderlohr, Christopher Alec, 67056 Ludwigshafen am Rhein (DE)
(74) Representative: BASF IP Association

(57) **Abstract**

Method (102) for selecting, from a foam mix comprising one or more foam pieces, target foam pieces that comprise target foam material that is suitable for a predetermined recycling process, the method comprising the steps of: determining (102A) first composition data indicative of a composition of a sample foam piece at the first location, determining (1028) second composition data indicative of the composition of the sample foam piece at a non-overlapping second location different than the first location; and selecting (102C) the sample foam piece as a target foam piece upon determining that the first composition data determined at the first location and the second composition data determined at the second location are indicative of the target foam material.

## Description

The present invention is directed to a method for selecting, from a foam mix comprising one or more foam pieces, target foam pieces that comprise target foam material suitable for a predetermined recycling process. The invention is further directed to a method for pre-processing a foam mix, to a pre-processing arrangement and to a computer program.

Currently, in the field of foam recycling, innovative alternatives are being developed and deployed that are categorized as chemical recycling (vs. mechanical recycling). This will take the plastic resin back to its base state - for instance in the case of polystyrene foam (PS foam), back to a styrene monomer, or in the case of polyurethane foam (PU foam) back to the aromatic diisocyanates (e.g. TDI, MDI) and Polyol. TDI is typically used to make flexible polyurethane foam for furniture, bedding, carpet underlay and other products. MDI is primarily used to make rigid polyurethane foams used as insulation for homes, but may also be present in flexible foam formulations.

An example of typical pre-processing steps for foam recycling, in particular for polystyrene foams, are summarized in the website https://www.recyclefoam.org/about-foam-recycling. Foam residues are either placed in the same container as other recyclables or are taken to a dedicated drop-off center. From there, the recyclables are delivered to a sorting facility or material recovery facility (MRF) where the foam is either separated from other recyclables (mechanically or manually) or are kept separated from the other recyclables. The foam pieces are delivered to a grinder or shredder from where they are transferred to a densifier, compaction unit or press, where the loose foam elements are compacted for storage or transportation to the recycling facility. Another example of the steps of a pre-processing method for a polystyrene foam mix can be found in the website https://www.homefor-foam.com/recycli ng/.

In a mechanical recycling process, the foam flakes are typically mixed with a binding agent and the mixture is steamed and pressed, for instance in a cylindrical press, a process with is antibacterial and actives the binding agent. After the pressed cylinder has dried, it can be peeled to a desired thickness. The rolls are ultimately cut to size into a recycled foam product, for instance as fall absorbing plates or sound or heat isolating material.

Polyurethane (also referred to as PU) is one of the most important materials of the wide-ranging and diverse family of polymers and plastics. It can be solid or have an open cellular structure. In this case it is referred to as foam. Foams, in turn, can be flexible or rigid. Polyurethane is typically manufactured by reacting polyols and diisocyanates, both products derived from crude oil. A series of additives are then added to produce high-quality PU foam products. The nature of the additives depends on the application the foam will be used for, which include, among others, bedding, furniture, and automotive.

Currently, in the case of flexible PU-foam, the main application for mechanical recycling is rebounded foams, e.g. for carpet underlays. Mainly post industrial waste --rather than post costumer waste-- flex foams are shredded, and the single pieces are glued together with a PU-adhesive and pressed to form a carpet underlay. Mechanical recycling processes are described, for instance, in documents US 5290818 A, US 6136870 A or US 9410026 B1.

The brochure "The end-of-life of flexible polyurethane foam from mattresses and furniture. An overview of regulatory drivers, recycling technologies and remaining challenges" issued by the European Association of Flexible Polyurethane Foam Block Manufacturers (https://europur.org/wp-content/uploads/2022/04/EoL-Brochure-2021- EUROPUR.pdf), August 2021, in particular in Part II, addresses the evolution of recycling technologies, namely mechanical recycling, chemical recycling and thermochemical recycling.

The scientific publication by M. Grdadolnik et al. titled Insight into Chemical Recycling of Flexible Polyurethane Foams by Acidolysis, ACS Sustainable Chem. Eng. 2022, 10, 3, 1323-1332 describes an exemplary chemical recycling process for polyurethane foams. Other examples of chemical recycling processes are disclosed, for instance in documents DE 102016122275 A1, DE 102013106364 A1, WO 2021023889 A1, and US 20220251328 A1.

In the particular and exemplary case of mattress manufacturing plants, several types of materials are used when manufacturing mattresses. Many mattresses include parts such as fabric covers, polyurethane foam padding, and metal springs. Mattress factories also generate grades of by-products such as LDPE Mattress Bags and Old Corrugated Containers OCC. Mattress plant recycling services aim to recycle or reuse all of these materials. Some recycling services solely address end of life materials discarded by the general public. However, mattress factory recycling services offer waste management solutions for scrap materials generated from manufacturing operations.

End-of-Life PU foams made from flexible PU foam waste (e.g., mattresses, upholstered furniture, car seats, etc.) consist of a mixture of different PU foam types, referred to herewithin as PU foam materials, whose composition may contain a variety of compositions (standard foam, high resilient foam, viscoelastic, etc.) and/or additives, such a fillers, flame retardants, styrene-acrylonitrile (SAN) dyes, etc. Producing a high-quality product from an unsorted feed mixture, in particular for a chemical recycling process, is therefore not possible. Various problems occur if the target foam material, i.e. the material or materials suitable for the recycling process, is not properly sorted, especially for chemical recycling. Firstly, low quality product is expected when no proper sorting is carried out beforehand, particularly in the case of high-quality chemical recycling, whose ultimate goal is to provide polyols with virgin-polyol quality that are suitable as 1:1 substitutes thereof. This results in most cases in an off-specification product after the chemical recycling. Further, technical damage of the different process steps during chemical recycling can happen, if the stream of unsuitable material is not sorted properly. The chemical reaction conditions cannot be optimized in terms of energy preservation and product conversion. Low throughput and high retention times are the consequence of feeding non-suitable foam material to the reactor. Without a sorting step, the quality of the products resulting from a chemical recycling process is typically poor, as undetermined compositions or the presence of undetermined additives lead to unknown side reaction products. Besides, product yield deteriorates with different foam materials and additives, as post-processing yield, such as phase separation and filtration, is influenced by the additives.

For example, PU foam can be recycled chemically into the basic feed stocks of PU e.g. into Polyols and Isocyanates. A promising feedstock for this process is end of life material e.g. PU foam mattresses. For chemical reasons, it does make sense to separate PU foam mattresses into mattresses made from standard foam, viscoelastic foam, high resilient (HR) foam, etc. Further discriminations e.g. according to SAN content or flame retardant content optimizes the performance and product qualities that can be achieved in a chemical recycling process. To achieve a homogeneous feed material of high content of standard Polyols suitable for a high-quality chemical recycling process it is necessary to pre-process the mattress feed stock. Pre-processes can include operation steps such as transportation, sorting, shredding, baling, feeding to reactors. A critical problem that has not been solved up to now is to optimize the combination of these process steps in a way that the pre-processing reaches the maximum economic efficiency. Compared to treatment processes for other (non-foam) recycling materials for PU foams special problems arise due to the low density of the material and the large dimensions of the material, making an efficient handling mandatory to be economically successful.

It is an object of the present invention to provide an optimized method for sorting target foam pieces that enables a general reduction of the recycling costs and, in particular in the case of chemical recycling, results in a higher yield and higher product quality.

According to a first aspect of the present invention, a method for selecting, from a foam mix comprising one or more foam pieces, target foam pieces that comprise target foam material that is suitable for a predetermined recycling process is disclosed. The method of the first aspect of the invention comprises the steps of:
- determining first composition data indicative of a composition of a sample foam piece at a first location by means of an analysis-setting;
- determining second composition data indicative of the composition of the sample foam piece at a non-overlapping second location different than the first location by means of an analysis-setting; and
- selecting the sample foam piece as a target foam piece upon determining that the first composition data determined at the first location and the second composition data determined at the second location are indicative of the target foam material.

Analysis-settings refers to methods and/or devices that are implementable for obtaining relevant composition data.

Typical sorting methods involve the use of sensors, e.g. optical sensors, to detect and identify the foam material before deciding if the foam material has an acceptable quality or not for the predetermined recycling process, i.e. if the foam material qualifies as a target foam material. However, due to the variety of different compositions and layered or packed material design, the detection and sorting process is sometimes falsified and some foam pieces can be regarded as having sufficient quality although it might comprise a layer or section of unacceptable foam material. If such a composite foam piece is fed to the recycling process it can cause severe trouble of spoil the product quality.

Thus, according to the invention, extending the determination of the composition data to a second non-overlapping location allows for the detection of different foam material types (when present) in the same sample foam piece under analysis, and thus provides a more reliable method for sorting out those pieces that are not suitable for the downstream recycling process.

Foam, also referred to as foamed plastic, is a synthetic resin converted into a spongelike mass with a closed-cell or open-cell structure, either of which may be flexible or rigid.

Foam is used for a variety of products, including cushioning materials, air filters, furniture, toys, thermal insulation, sponges, plastic boats, panels for buildings, lightweight beams, etc. Under appropriate conditions almost every thermosetting or thermoplastic resin can be converted into a foam. Plastics that are commonly foamed include vinyls, polystyrene, polyethylene, phenolics, silicones, cellulose acetate and urethanes, such as polyurethane (PU). PU foams is typically used in the fabrication of mattresses and upholstery. Different types of PU foams include, for instance, standard PU foam, high resilience PU foam, viscoelastic PU foam, etc. Depending on foam parameters such as the density,resiu or chemical compositions, PU foams are available as, for example, and non-restrictively, charcoal foam, dry fast foam, high density foam, lux foam (evlon foam), latex-rubber foam, rebond foam, etc, which are all open-cell Polyurethane foams.

The composition data is data that is indicative of the composition of the foam piece under analysis, from which information regarding the type of foam material and/or contained additives can be inferred, based on which the suitability of the foam piece for the predetermined recycling process, i.e. whether the foam piece comprises or not the target foam material, can be decided.

In the following, developments of the method of the first aspect of the invention will be disclosed.

In a preferred development, the analysis-setting used for determining the first composition data is the same analysis-setting as the analysis-setting used for determining the second composition data. Alternatively, in another development the analysis-setting used for determining the first composition data is different than the analysis-setting used for determining the second composition data.

In a development, the method further comprises determining respective composition data indicative of the composition of the sample foam piece at three or more different non overlapping locations and selecting the sample foam piece as a target foam piece upon determining that at least predetermined percentage of the determined composition data is indicative of the target foam material. For instance, in an exemplary and non-restricting development, the sample foam piece is analysed at four different non-overlapping locations and the sample foam piece is selected as a target foam piece upon determining that at least 75%, i.e., three out of the four determined composition data, are indicative of the target foam material. In a another development, a sample foam piece is selected as a target foam piece upon determining that at least 80%, at least 85%, at least 90% or at least 95% of the composition data determined at different non-overlapping locations, are indicative of the target foam material. In a most preferred development, the sample foam piece is selected as a target foam piece upon determining that all determined composition data are indicative of target foam material.

In a preferred development, the two or more non overlapping locations at which the composition data is determined are selected in dependence on the size and shape of the sample foam piece, such that they are essentially uniformly distributed on the sample foam piece.

In a preferred development the determination of the first composition data and of the second composition data is performed using one or more of optical sorting methods. In particular, the one or more optical sorting methods is or are selected from the group consisting of a near-infrared spectroscopy based method, a medium-infrared spectroscopy based method, a UV-VIS spectroscopy based method, an optical camera based method, a Raman spectroscopy based method, a THz spectroscopy based method, and a laser induced breakdown spectroscopy method.

Infrared spectroscopy (IR spectroscopy or vibrational spectroscopy) is the measurement of the interaction of infrared radiation with matter by absorption, emission, or reflection. It is used to study and identify chemical substances or functional groups in solid, liquid, or gaseous forms. It can be used to characterize new materials or identify and verify known and unknown samples.

The infrared portion of the electromagnetic spectrum is usually divided into three re-gions; the near-, mid- and far- infrared, named for their relation to the visible spectrum. The higher-energy near-IR, approximately 14,000-4,000 cm-1 (0.7-2.5 µm wavelength) can excite overtone or combination modes of molecular vibrations. The mid-infrared, approximately 4,000-400 cm-1 (2.5-25 µm) is generally used to study the fundamental vibrations and associated rotational-vibrational structure. For instance, near infrared spectroscopy (NIRS) is a spectroscopic method that uses the near-infrared region of the electromagnetic spectrum (approximately from 700 nm to 2500 nm).Typical applications include medical and physiological diagnostics, and control quality. Near-infrared spec-troscopy is not a particularly sensitive technique, but it can be very useful in probing bulk material with little or no sample preparation. Instrumentation for NIRS includes a source, a detector, and a dispersive element (such as a prism, or, more commonly, a diffraction grating) to allow the intensity at different wavelengths to be recorded. The instrumentation is very similar to that used for the UV-visible and mid-IR ranges.

UV-VIS spectroscopy refers to absorption spectroscopy or reflectance spectroscopy in part of the ultraviolet and the full, adjacent visible regions of the electromagnetic spec-trum. Being relatively inexpensive and easily implemented, this methodology is widely used in diverse applied and fundamental applications. The only requirement is that the sample absorb in the UV-VIS region, i.e. be a chromophore. Absorption spectroscopy is complementary to fluorescence spectroscopy. Parameters of interest, besides the wavelength of measurement, are absorbance (A) or transmittance (%T) or reflectance (%R), and its change with time. UV/VIS spectroscopy is routinely used in analytical chemistry for the quantitative determination of diverse analytes or sample, such as transition metal ions, highly conjugated organic compounds, and biological macromolecules.

Raman spectroscopy is a spectroscopic technique typically used to determine vibration-al modes of molecules, although rotational and other low-frequency modes of systems may also be observed. Raman spectroscopy is commonly used in chemistry to provide a structural fingerprint by which molecules can be identified. Typically, a sample is illuminated with a laser beam. Electromagnetic radiation from the illuminated spot is collected with a lens and sent through a monochromator. Elastic scattered radiation at the wavelength corresponding to the laser line (Rayleigh scattering) is filtered out by either a notch filter, edge pass filter, or a band pass filter, while the rest of the collected light is dispersed onto a detector.

Laser induced breakdown spectroscopy is a type of atomic emission spectroscopy which uses a highly energetic laser pulse as the excitation source. The laser is focused to form a plasma, which atomizes and excites samples. The formation of the plasma only begins when the focused laser achieves a certain threshold for optical breakdown, which generally depends on the environment and the target material.

X-ray fluorescence (XRF) refers to the emission of characteristic "secondary" (or fluorescent) X-rays from a material that has been excited by being bombarded with high-energy X-rays or gamma rays. The phenomenon is widely used for elemental analysis and chemical analysis.

Terahertz spectroscopy detects and controls properties of matter with electromagnetic fields that are in the frequency range between a few hundred gigahertz and several terahertz (abbreviated as THz). In many-body systems, several of the relevant states have an energy difference that matches with the energy of a THz photon. Therefore, THz spectroscopy provides a particularly powerful method in resolving and controlling individual transitions between different many-body states.

In a particular development the determination of the first composition data and of the second composition data is performed using a hand held near infrared spectroscopy device.

In a development the determination of the first composition data at the first location and the determination of the second composition data at the second location are performed using two different optical sorting method.

In yet another development the first composition data and/or the second composition data is indicative of a type of foam, in particular of a type of polyurethane foam of the sample foam piece.

In another development, the first composition data and/or the second composition data is indicative of a type of additive and/or impurity or contamination of the sample foam piece. In particular, the first composition data and/or the second composition data is indicative of one or more additives selected from a group consisting of water, inorganic fillers, such as, but not limited to CaCO3, organic fillers, flame retardants, styrenes (in particular styrene acrylonitrile, SAN), silicon stabilizers, crosslinker, chain extenders, monools, such as phenoxyethanol, antioxidants, defoamers, catalysts and dyes.

The above mentioned SAN content of the introduction generally may embrace content of "graft polyols" often also termed polymer polyols. Polymer polyols mean dispersions of polymers, mostly acrylonitrile-styrene copolymers, in particular stabilized by the co-polymerization of macromers in a polyether polyol matrix. The graft polyols used for the preparation of polyurethane foams usually have a hydroxy value in the range from 15 to 120 mg KOH/g. They may be present in the polyurethane foams in an amount of up to 25 wt.%.

In another development, the first composition data is indicative of a type of additive and/or impurity and the second composition data is indicative of a type of foam. The first composition data and/or the second composition data can be indicative of the presence of an impurity or contaminant material such as dust, dirt, humidity, microbial contamination or fungal contamination.

Water represents in many cases the additive with a highest content, sometimes forming up to 70% of the total amount of additives. Typically it reacts to CO₂ during the foaming process.

In particular for flexible polyurethane foams, the fillers promote an increase in density and resistance to compression. However, they reduce the resilience and contribute to the increase in permanent deformation. In addition, properties such as tear strength are significantly affected by the introduction of fillers. Accordingly, it is necessary to determine the correct concentration of the filler in the polymer matrix, so as to obtain a product of reliable quality. Some notable fillers include inorganic materials such as calcium carbonate, dolomite, aluminum silica, titanium dioxide, chalk and talc while some of the organic materials used as filler are SAN, carbon black and natural fibers.

Silicone stabilizer or surfactants for PU foams are typically grafted copolymers which consist of a polydimethylsiloxane backbone and polyethylene oxide-co-propylene oxide pendant groups. Some silicone stabilizers include siloxanes with polyetherol sidechains. Stabilizers are typically used as surfactants to stabilize the foam cells in the flexible polyurethane foaming process. It increases the compatibility of raw materials, decrease surface tension in polyurethane foam systems, improve emulsification and nucleation, prevent coalescence and stabilize cell membranes.

The chemical nature of the PU, the high air permeability, and the high inner surface area of the foam structure cause this material to be highly flammable. Consequently, the application of flame retardants to flexible PU foams is an important issue. The use of halogenated flame retardants is not considered optimal, in part due to the high emission level and the possible phase-out by the European Risk Assessment Body. Consequen-ly, melamine as a non-halogenated flame retardant is applied more and more frequently. Other flame retardants include, but are not limited to formaldehyde-based retardants and phosphorusbased retardants. Also, expandable graphite may be used as flame retardant.

Typically, the addition of crosslinking additives, or crosslinkers, to PU foams serves to reduce or eliminate deterioration under humid aging conditions of these foams, in particular those made using non-fugitive tertiary amine urethane catalysts. Examples of cross-linkers, in particular for high resilient (HR) PU foams include glycerine, diethanolamine, and sorbitol.

Chain extenders are typically low molecular weight diols or diamines that react with diisocyanates to build polyurethane molecular weight and increase the block length of the hard segment. Much like the diisocyanates, chain extenders can be either aliphatic or aromatic. Examples of chain extenders, in particular for VE foams, include Butandiol and Methylpropanediol.

Generally, for ensuring a safe production of PU foams, a foam stabilizer possesses weak uniformizing power and a defoaming agent is required for the purpose of controlling the formation of open cells. Commonly used defoaming agents include insoluble oils, polydimethylsiloxanes and other silicones, certain alcohols, stearates and glycols.

There are mainly two types of catalysts used in polyurethane technology, i.e. amine catalysts and organometallics. Amine catalysts generally catalyze the isocyanate-water reaction better than the isocyanate-polyol reaction, while organometallics are considered as gel catalysts although they additionally influence blowing reactions. The amine catalysts, especially tertiary amines, are the most common organic base catalysts in the synthesis of polyurethanes. One of the most commonly used tertiary amine catalyst is 1,4-diazobicy-clo[2,2,2]octane (DABCO). It catalyzes both isocyanate-polyol and isocyanate-water reactions. One of the drawbacks of using tertiary amines is their offensive fishlike odor and high volatility. Increasing environmental concerns toward decreasing of emissions of volatile organic compounds (VOC) have contributed to the development of nonfugitive catalysts. In another. Tertiary amines are typically present in small concentrations, e.g., under 0.5% of the total foam and they are typically volatile and no longer detectable in the final foam. In addition, metal-catalysts are also used in PU foam manufacturing. For instance tin-organic compounds (mostly DBTL dibutyltin dilaurate) are now only permitted in very small quantities by the testing institutes (including their degradation products). However, alternative tin compounds are currently being used.

Further, the optical sorting methods can be advantageously used to sort out material which is covered with or contains unacceptable dirt, dust, or microbial or fungal layers, irrespectively of the material having the right foam composition for the recycling process or not. In this cases the composition data is indicative of the presence of said unacceptable dirt, dust, or microbial or fungal material, i.e. indicative of an impurity or contamination.

The method of the first aspect of the invention thus enables a high-quality sorting process. Any process that requires to sort out unsuitable foam pieces will benefit from this method. For instance, mattress recycling process, in particular a chemical recycling process, will benefit from a more stable feed supply, leading to a more stable chemical recycling process with a higher yield. Further, the recycled raw materials, such as polyol and TDI, will have a higher purity and a more stable composition, which will enable to replace virgin material with the recycled raw materials during the production of new mattresses. Additionally, shutdowns, cleaning efforts or repair works in the chemical recycling process can be reduced by providing a higher quality material to the reactor.

According to a second aspect of the present invention, a method for pre-processing a foam mix for feeding a reactor of a predetermined recycling process is disclosed. The method comprises the steps of:
- performing the method of the first aspect of the invention for selecting target foam pieces from the foam mix;
- transporting the selected target foam pieces to a shredding unit;
- shredding, at the shredding unit, the selected target foam pieces to form shredded foam elements;
- feeding the shredded foam elements to the reactor for recovering raw materials.

Alternatively, or additionally a method for pre-processing a foam mix also in accordance with the invention comprises the steps of:
- receiving the foam mix comprising foam pieces and transporting the foam pieces to a shredding unit;
- shredding, at the shredding unit, the foam pieces to form shredded foam elements;
- performing the method of the first aspect of the invention on the shredded foam elements for selecting shredded target foam elements upon determining that the first composition data obtained at a first location of a sample shredded foam element under analysis and the second composition data obtained at an non overlapping second location of the sample shredded foam element are indicative of the target foam material; and, optionally;
- feeding the selected shredded target foam elements to the reactor for recovering raw materials.

In this particular development, the foam containing objects to be sorted are the shredded foam elements, and the result of the sorting step are selected target foam elements.

Preferably, in a development of the method of the second aspect, the method for selecting target foam pieces and/or target foam elements, i.e., generally speaking, foam objects comprising target foam material, is performed twice, once using foam pieces as input, before shredding the selected target foam pieces, and a second time using foam elements as input, before feeding the selected target foam elements to the reactor.

In this particular development, the method comprises the steps of:
- performing the method of the first aspect for selecting target foam pieces from the foam mix;
- transporting the selected target foam pieces to a shredding unit;
- shredding, at the shredding unit, the selected target foam pieces to form shredded foam elements;
- performing again a method according to the first aspect of the invention on the shredded foam elements for selecting shredded target foam elements upon determining that the composition data obtained at a first location of the shredded foam element and at a second location of the shredded foam element is indicative of the target foam material; and, optionally
- feeding the selected shredded target foam elements to the reactor for recovering raw materials.

Thus, the method of the second aspect of the invention shares the advantages of the method of the first aspect.

In the context of the present invention the shredded foam elements, respectively target foam elements, in particular mean shredded PU foam elements. Shredded PU foam elements embrace generally a "comminuted polyurethane or polyisocyanurate foam or the like foam material". Preferably this means the material is obtained from a foam, and the comminuted polyurethane or polyiso-cyanurate is for example used in shredded form, i.e. in the form of granules, flakes, as an agglomerate, or as a powder.

The polyurethane or polyisocyanurate foams can be comminuted by conventional methods, for example by shredding, e.g. in a rotation mill or rotary mill at room temperature, to a particle size of ordinarily less than 500 mm, for example to a particle size in the range of from 10 to 500 mm, preferably to a particle size of less than 20 mm, or ground, e.g. by known cold grinding processes.

Preferably, for a milled foam a particle size of less than 5 mm is selected, for example a particle size in the range of 0.01 mm to 5 mm, and preferably in the range of 0.01 mm to 1 mm.

The properties of the polyurethane or polyisocyanurate foams might vary in broad ranges. Preferably, polyurethane foams are used in the process of the present invention. According to a further embodiment, the present invention is also directed to the process as disclosed above, wherein the polyurethane foams are selected from the group consisting of polyisocyanate derived polyurethane foams.

The polyurethane or polyisocyanurate foams used in the present invention are preferably obtained from items produced from polyurethane foams at a time after use for the purpose for which they were manufactured or polyurethane foam waste from production processes.

Before subjecting to the process of the present invention, the items may be subjected to sorting steps and/or to mechanical comminution. That is, further sorting and bringing the items into appropriate sizes, e.g. by shredding, sieving or separation by rates of density, i.e. by air, a liquid or magnetically.

Optionally, these fragments may then undergo processes to eliminate impurities, e.g. paper labels. Furthermore, steps to remove blowing agents may be included in the process. Suitable methods are in principle known to the person skilled in the art.

Herein, the term "polyurethane foam waste" includes end-of-life polyurethane foams and production rejects of PU foams or waste generated through further processing of PU foams. In this context, the term "spent polyurethane foam" denotes an item produced from a polyurethane foam at a time when it has already been used for the purpose for which it was manufactured. "Production rejects of polyurethane foams" denotes polyurethane foam waste occurring in production processes of PU foams.

Generally, polyurethane foams are produced by a reaction between a polyisocyanate component and a polyol component. Typically, further materials, in particular additives, such as flame retardants (e.g. phosphorous-based), polymerization catalysts (e.g. tertiary amines), fillers and surfactants as siloxanes can be added in the production process of the polymers.

The properties of a polyurethane foam are influenced by the chemistry of polyisocyanate and polyol components used and the recipe applied in polymerization. For example, the starting materials may influence the crosslinking density of the polymers in a three-dimensional network. Rigid polyurethane are typically obtained from monomers with a comparably low molecular weight and high functionality creating a highly crosslinked, dense network.

Industrially and consequently in large quantities, especially methylenedi(phenylisocyanate) (MDI) or its polymeric forms or tolylene 2,4 and 2,6-diisocyanate (TDI) are used as polyisocyanate components for the production of PU rigid foams and PU flexible foams. For a representative composition of these PU foams, see for example US 9,023,907 B2, WO 2015/121057 and WO 2013/139781.

Organic polyisocyanates that can be used in the preparation of polyurethanes are any of the known organic di- and polyisocyanates, preferably aromatic polyfunctional isocyanates.

Suitable polyisocyanate components used for the production of the polyurethanes or polyisocyanurates comprise any of the polyisocyanates known for the production of polyurethanes or polyisocyanurates. These comprise the aliphatic, cycloaliphatic, and aromatic difunctional or poly-functional isocyanates known from the prior art, and also any desired mixtures thereof. Examples are diphenylmethane 2, 2'-, 2,4'-, and 4,4'-diisocyanate, the mixtures of monomeric diphenylmethane diisocyanates with diphenylmethane diisocyanate homologs having a larger number of rings (polymer MDI), isophorone diisocyanate (IPDI) and its oligomers, tolylene 2,4- and 2,6-diisocyanate (TDI), and mixtures of these, tetramethylene diisocyanate and its oligomers, hexa-methylene diisocyanate (HDI) and its oligomers, naphthylene diisocyanate (NDI), and mixtures thereof.

Preferably, tolylene 2,4- and/or 2,6-diisocynate (TDI) or a mixture thereof, monomeric diphenyl-methane diisocyanates, and/or diphenylmethane diisocyanate homologs having a larger number of rings (polymer MDI), and mixtures of these. Other possible isocyanates are mentioned by way of example in "Kunststoffhandbuch [Plastics handbook], volume 7, Polyurethane [Polyure-thanes]", Carl Hanser Verlag, 3rd edition 1993, chapter 3.2 and 3.3.2.

The organic di- and polyisocyanates may be used individually or in the form of mixtures.

Common polyols used in huge quantities are, e.g., selected from the group consisting of polyeth-er polyols, polyester polyols, polyetherester polyols and mixtures thereof.

Polyetherols are by way of example produced from epoxides, for example propylene oxide and/or ethylene oxide, or from tetrahydrofuran with starter compounds exhibiting hydrogenactivity, for example aliphatic alcohols, phenols, amines, carboxylic acids, water, or compounds based on natural substances, for example sucrose, sorbitol or mannitol, with use of a catalyst. Mention may be made here of basic catalysts and double-metal cyanide catalysts, as described by way of ex-ample in WO 2006/034800, EP 0090444, or WO 2005/090440.

Polyesterols are by way of example produced from aliphatic or aromatic dicarboxylic acids and polyhydric alcohols, polythioether polyols, polyesteramides, hydroxylated polyacetals, and/or hydroxylated aliphatic polycarbonates, preferably in the presence of an esterification catalyst. Other possible polyols are mentioned by way of example in "Kunststoffhandbuch [Plastics hand-book], volume 7, Polyurethane [Polyurethanes]", Carl Hanser Verlag, 3rd edition 1993, chapter 3.1.

The method of the first aspect performed on the foam pieces for selecting target foam pieces and the method of the first aspect performed on the foam elements for selecting target foam elements may be similar or differ. The target foam pieces and the target foam elements can be selected using similar or different selection rules, e.g. the composition analysed in each of the instances of the method can be different. For instance, the target foam pieces can be selected as a function of their foam material content, whereas the target foam elements can be selected as a function of their additives.

In a preferred development the step of shredding the selected target foam pieces results in shredded foam elements with a maximum dimension in the range of 100 mm to 500 mm.

In another development, the step of milling the selected target foam elements results in milled target foam flakes with a maximum dimension smaller than 120 mm preferably smaller than 90 mm even more preferable smaller than 70 mm.

The method of the first aspect of the invention can be advantageously used for pre-processing a plastic mix, additionally or alternatively comprising other types of non-foam plastic. In different developments, the foam mix can be a polyurethane mix, a flexible polyurethane mix, or a mattress mix.

A third aspect of the present invention is formed by a pre-processing arrangement for pre-processing a foam mix for feeding a reactor of a recycling process for recovering raw materials. The pre-processing arrangement comprises at least one target foam selection unit that is configured to select, from the foam mix, target foam pieces comprising target foam that is suitable for the reactor. The target foam selection unit comprises a foam composition determination unit configured to determine first composition data indicative of the composition of a sample foam piece at a first location and configured to determine second composition data indicative of the composition of the sample foam piece at a non-overlapping second location. The target foam selection unit also comprises a processing unit configured to receive the first composition data and the second composition data and to determine that sample foam piece is a target foam piece when both the first composition data and the second composition data are indicative of target foam.

In a development, the target foam selection unit is arranged in a single device. In an alternative development, the foam composition determination unit is signally connected, e.g. via a wired or a wireless connection, to the processing unit. In yet another development, the foam composition determination unit comprises a first device for determining the first composition data at the first location and a second device for determining the second composition data at the second location, both of which are signally connected (wired, or wirelessly) to the processing unit, which may be integrated with one of the devices or be an external processing unit.

Depending on where the target foam selection unit is placed within the arrangement, a target foam selection unit according to the invention can be also used to determine first composition data at a first location of a sample foam element, and to determine second composition data at a second location of the sample foam element. Here, the processing unit is configured to receive the first composition data and the second composition data and to determine that sample foam element is a target foam element when both the first composition data and the second composition data are indicative of the target foam material.

In another development, the pre-processing arrangement of the third aspect further comprises a transporting unit that is configured to receive the selected target foam pieces and to transport the selected target foam pieces to a shredding unit; wherein the shredding unit is configured to shred the selected target foam pieces to form shredded foam elements for feeding to the reactor.

In yet another development, the pre-processing arrangement of the third aspect additionally comprises a foam element selection unit that is configured to select, from the shredded foam elements, shredded target foam elements comprising target foam that is suitable for the reactor. The foam element selection unit is preferably configured as target foam selection unit in which the input material are foam elements provided by the shredding unit. In particular, in a development, the foam element selection unit comprises a foam composition determination unit configured to determine first composition data of a sample foam element at a first location, and to determine second composition data of the sample foam element at a non-overlapping second location of the sample foam element. Further, the processing unit, which can be a dedicated processing unit or the processing unit of the target foam selection unit, is configured to receive the first additional composition data and the second additional composition data and to determine that the sample foam element is a target foam element when both the first composition data and the second composition data are indicative of target foam.

The inclusion of two sorting steps, namely one for foam pieces and another one for foam elements, enables an optimal balance in terms of cost reduction and yield improvement compared to known pre-processing method or strategies.

In another development the target foam selection unit and/or the foam element selection unit comprise a first composition determination unit that is configured to determine the first composition data at the first location and a second composition determination unit configured to determine the second composition data at the second non-overlapping location.

Preferably, in a development, the foam composition determination unit and/or the first composition determination unit and/or the second composition determination unit is, or are, selected from a group consisting of a near-infrared spectroscopy device, a medium-infrared spectroscopy device, a UV-VIS spectroscopy device, an optical camera, a Raman spectroscopy device, a THz spectroscopy device, a laser induced breakdown spectroscopy device and an X-ray fluorescence device.

A fourth aspect of the present invention is formed by a computer program comprising instructions which, when executed by a control unit of a target foam selection unit cause the target foam selection unit to perform the method of any of the preceding claims 1 to 7.

These and other aspects of the invention will be apparent from and elucidated with reference to the embodiments described hereinafter.

The embodiments of the invention are described in the following on the basis of the drawing in comparison with the state of the art, which is also partly illustrated. The latter is not necessarily intended to represent the embodiments to scale. The drawing is, where useful for explanation, shown in schematized and/or slightly distorted form. With regard to additions to the teaching immediately recognizable from the drawing, reference is made to the relevant prior art. It should be kept in mind that numerous modifications and changes can be made to the form and detail of an embodiment without deviating from the general concept of the invention. The features of the invention disclosed in the description, in the drawing and in the claims may be essential for a further development of the invention, either individually or in any combination. In addition, all combinations of at least two of the features disclosed in the description, drawing and/or claims fall within the scope of the invention.

The general concept of the invention is not limited to the exact form or detail of the preferred embodiments shown and described below or to a subject matter, which would be limited in comparison to the subject matter as claimed in the claims.

For specified design ranges, values within specified limits of the ranges are also dis-closed as limit values and thus are arbitrarily applicable and claimable.

The following drawing shows in:
- Fig. 1: a flow diagram of an exemplary method for pre-processing a foam mix that includes a method for selecting target foam pieces that comprise target foam material in accordance with a first embodiment of the invention;
- Fig. 2: a flow diagram of another exemplary method for pre-processing a foam mix that includes a method for selecting target foam elements that comprise target foam material in accordance with a first embodiment of the invention;
- Fig. 3: a flow diagram of an exemplary method for pre-processing a foam mix in accordance with a third embodiment of the invention;
- Fig. 4: a schematic block diagram of a pre-processing arrangement in accordance with a fourth embodiment of the invention;
- Fig. 5: a schematic block diagram of a pre-processing arrangement in accordance with a fifth embodiment of the invention;
- Fig. 6A: a schematic block diagram of an exemplary target foam selection unit in accordance with a sixth embodiment of the invention; and
- Fig. 6B: a schematic block diagram of another exemplary target foam selection unit in accordance with a seventh embodiment of the invention.

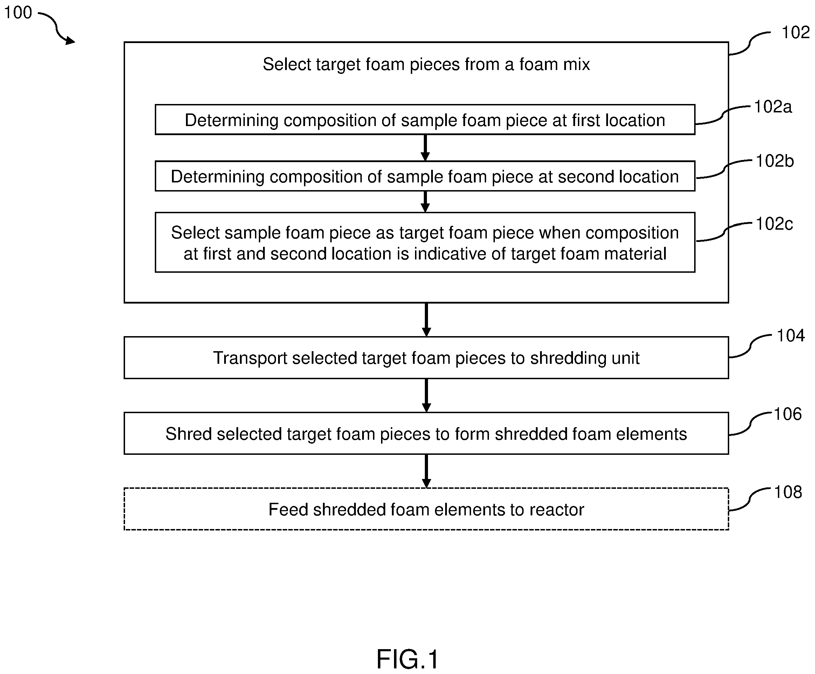

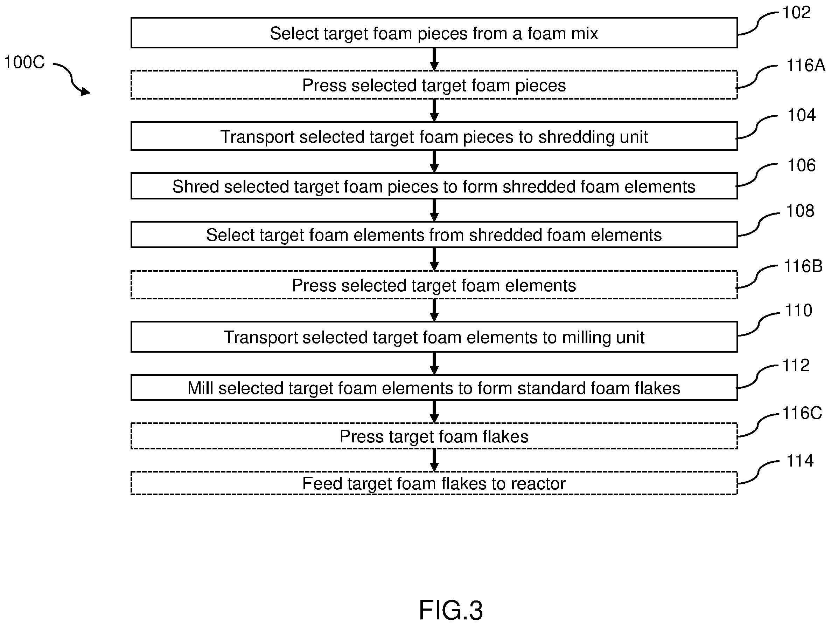

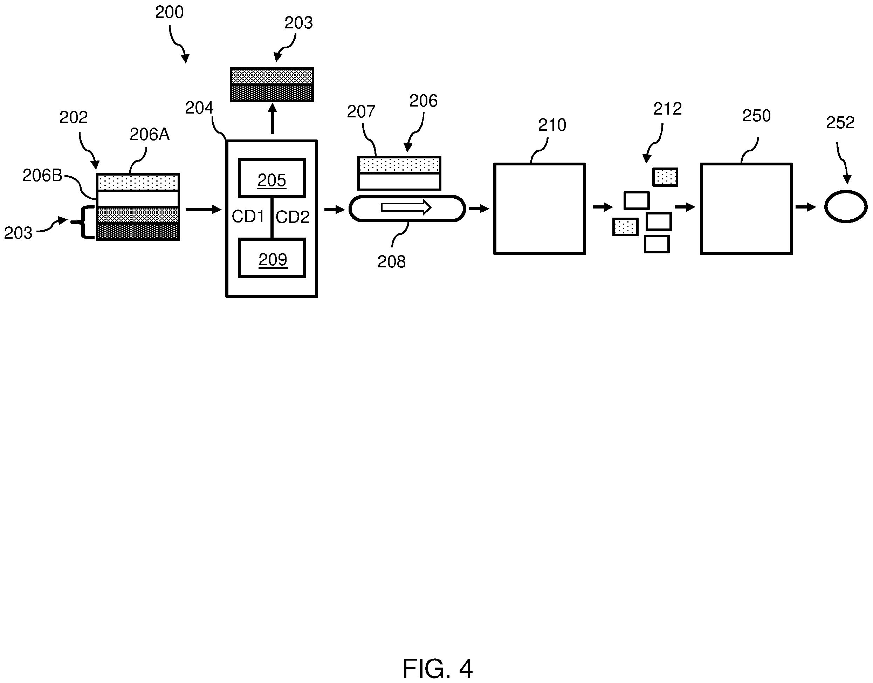

Fig. 1 shows a flow diagram of an exemplary method 100 for pre-processing a foam mix that includes a method 102 for selecting target foam pieces that comprise target foam material in accordance with a first embodiment of the invention. The following discussion will also make reference to the features of exemplary pre-processing arrangements that are shown in Figs. 3 and 4 and described below with more detail. The method 102 for selecting target foam pieces thus forms a first step of the method 100 for pre-processing the foam mix. The method 102 is suitable for selecting, from a foam mix 202 comprising one or more foam pieces 206A, 206B, 203 (see Fig. 4), target foam pieces 206 that comprise target foam material 207 that is suitable for a predetermined recycling process. The method 102 comprises, in a first step 102A, determining first composition data CD1 at a first location of a sample foam piece 202C. The method also comprises, in a step 102B, determining second composition data CD2 of the sample foam piece 202C at a non-overlapping second location, different than the first location. The method 102 also comprises, in a step 102C, selecting the sample foam piece 202C as a target foam piece 206 upon determining that the first composition data CD1 and the second composition data CD2 are indicative of the target foam material 207. The first composition data and the second composition data are indicative of a composition of the sample foam piece under analysis.

Once the target foam piece has been selected according to the method 102, the pre-processing method 100 of Fig. 1 further includes, in a step 104, transporting the selected target foam pieces to a shredding unit 210, in a step 106, shredding the selected target foam pieces 206 to form shredded foam elements 212 and, optionally, in a step 108, feeding the shredded foam elements 212 into the reactor 150.

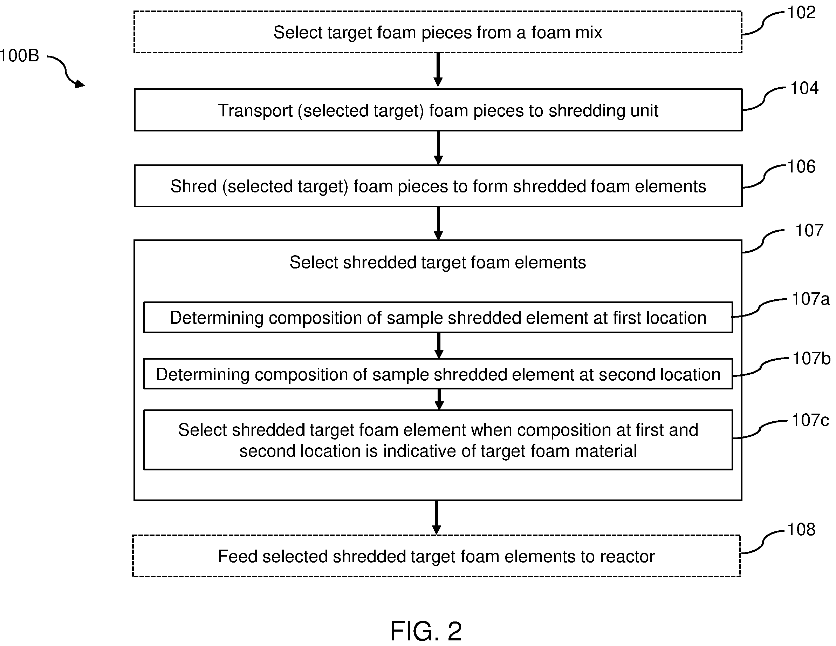

Fig. 2 shows a flow diagram of another exemplary method 100B for pre-processing a foam mix 202 that includes a method 107 for selecting target foam elements 206 that comprise target foam material 207 in accordance with a second embodiment of the invention. In the method 100B of Fig. 2, performing the method 102 described above is optional, as indicated by the discontinuous line. If the method 102 is not performed, the foam pieces of the foam mix are all transported, in a step 104 to the shredding unit. If the method 102 is performed, only the selected target foam pieces are transported in the step 104. The foam pieces that reach the shredding unit are shredded, in a step 106 to form shredded foam elements. Now, the method 107 for selecting target foam elements, or in other words, foam elements comprising target foam material, is carried out before feeding the selected target foam elements the reactor in step 108.

The method 107 comprises determining, in a step 107A first composition data CD1 at a first location L1 of a sample foam element 212B, the first composition data being indicative of a composition of the sample foam element 212B at said first location L1. The method also comprises determining, in a step 107B, second composition data CD2 at a second location L2 that does not overlap with the first location of the sample foam element 212B. The second composition data is indicative of the composition of the sample foam element 212B at said non-overlapping second location L2. The method 107 also comprises, in a step 107C, selecting the sample foam element 212B as a target foam element 216 upon determining that the first composition data CD1 and the second composition data CD2 are indicative of the target foam material 207.

Fig. 3 shows a flow diagram of an exemplary method 100C for pre-processing a foam mix 202. The method 100C for pre-processing a foam mix 202, for example, for feeding a reactor 250 of a recycling process, in particular a chemical recycling process for recovering raw materials, comprises the following steps. In a step 102, the method 102 includes performing a first sorting step for selecting, from the foam mix 202, target foam pieces 206 that comprise target foam material 207 that is suitable for the reactor 250. This method step corresponds to the method for selecting a target foam piece described with reference to Fig. 1 above. The selected target foam pieces may, at this stage, also comprise other foam materials, such as foam materials that are not suitable for the reactor. However, those unselected foam pieces are not further part of the pre-processing process and may, for example, be pressed and transported for another recycling process. The selected target foam pieces 206 are then transported, in a step 104, to a shredding unit 210. This transporting step 104 can be for instance carried out by means of a conveyor belt system, a sucking and/or blowing unit, by a road, rail, air or sea-based transport unit such as a truck, a train, an airplane or a ship, or by any combination thereof. The selected target foam pieces 206 are then shredded, in a step 106 to form shredded foam elements, also referred to as foam elements, and which are the result of shredding foam pieces or foam articles, and which have a similar size, in dependence on the used shredding unit. From the shredded foam elements, target foam elements 216 are then selected by performing a second sorting step 108. This second sorting step corresponds to the method 107 for selecting target foam elements as discussed with reference to Fig. 2 above. The selected target foam elements are then transported, in a step 110, to a milling unit. Those foam elements that, according to the second sorting step 108 (see also step 107 in Fig. 2) do not qualify as target foam elements 216 are excluded from the subsequent steps to guarantee that they are not fed to the reactor. The selected target foam elements 216 are milled to form target foam flakes, which, in an optional step 114, are fed into the reactor 250 of the recycling process.

In cases where the first sorting step 102 and the shredding step 106 are performed in different facilities where a transporting step 104 of the selected target foam pieces by road, train, sea or air is required, and/or in cases where the second sorting step 108 (see also step 107 in Fig. 2) and the milling step 112 are performed in different facilities where a transporting step 110 of the target foam elements by road, train, sea or air is required and/or in cases where the milling step 112 and the step of feeding 114 the target foam flakes to the reactor are performed in different facilities where a transport by road, train, sea or air is required. The method 100C therefore includes one, two or three pressing steps, namely a first pressing step 116A, wherein the selected target foam pieces are pressed for forming pressed target foam pieces prior to the step of transporting 104 the selected target foam pieces, as pressed target foam pieces, to the shredding unit and/or a second pressing step 116B, wherein the selected target foam elements are pressed for forming pressed target foam elements prior to the step of transporting 110 the selected target foam elements, as pressed target foam elements, to the milling unit, and/or a third pressing step 116C, wherein the target foam flakes are pressed for forming pressed target foam flakes prior to the step of feeding the target foam flakes, as pressed target foam flakes, to the reactor of the recycling process.

In a particular preferred example, the target foam flakes are pressed using an extruder. This is particularly advantageous for controlling dosage of target foam flakes into the reactor, especially when the reactor vessel of the reactor is pressurized.

Fig. 4 shows a schematic block diagram of a pre-processing arrangement 200 in accordance with a fourth embodiment of the invention. The pre-processing arrangement 200 is suitable for pre-processing a foam mix 202 for feeding a reactor 250 of a recycling process for recovering raw materials 252. The reactor 250 is exemplarily, but not necessarily, a chemical reactor for chemically recycling PU foam.

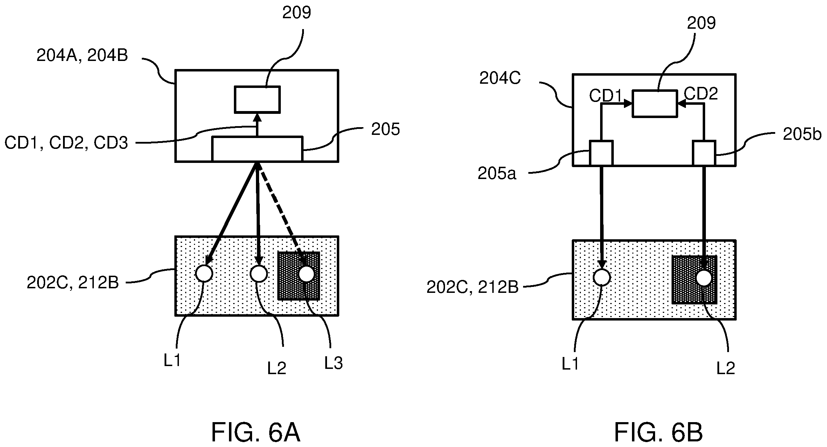

The pre-processing arrangement 200 comprises a target foam selection unit 204, configured to select, from the foam mix 202, target foam pieces 206 comprising target foam material 207 that is suitable for the reactor 250. An exemplary target foam selection unit 204 is shown in Fig. 6A. The target foam selection unit 204 of Fig. 6A comprises a foam composition determination unit 205 that is configured to determine (see step 102A) first composition data CD1 at a first location L1 of a sample foam piece (e.g. 202C, see Fig. 6A) of the foam mix 202, the first composition data being indicative of a composition of the sample foam piece, i.e. the foam piece currently under analysis. The foam composition determination unit 205 is also configured to determine (see step 102B) second composition data CD2 of the sample foam piece at a second, non-overlapping location L2. The second composition data is also indicative of the composition of the sample foam piece. The target foam selection unit 204 also comprises a processing unit 209 that is configured to receive the first composition data CD1 and the second composition data CD2 and to determine that sample foam piece is a target foam piece 206 when both the first composition data and the second composition data are indicative of target foam. If the first composition data CD1 and the second composition data CD2 are not indicative of the target foam material 207 the sample foam piece (see 203) is not selected and is removed from the pre-processing arrangement 200.

Preferably, the first composition data CD1 and the second composition data is indicative of a type of foam, in particular of a type of polyurethane foam of the sample foam piece. Additionally, or alternatively, the first composition data and the second composition data are indicative of a type of additive and/or impurity of the sample foam piece, in particular indicative of one or more additives, selected from a group consisting of water, inorganic fillers, flame retardants, styrenes (in particular styrene acrylonitrile), silicon stabilizers, crosslinker, chain extenders, monools, antioxidants, defoamers, catalysts and dyes. In another development, the first composition data is indicative of a type of additive and/or impurity and the second composition data is indicative of a type of foam.

The pre-processing arrangement 200 further comprises a transporting unit 208 that is configured receive the selected target foam pieces 206 and to transport the selected target foam pieces 206 to a shredding unit 210, wherein the shredding unit 210 is configured to shred the selected target foam pieces 206 to form shredded foam elements 212 for feeding to the reactor.

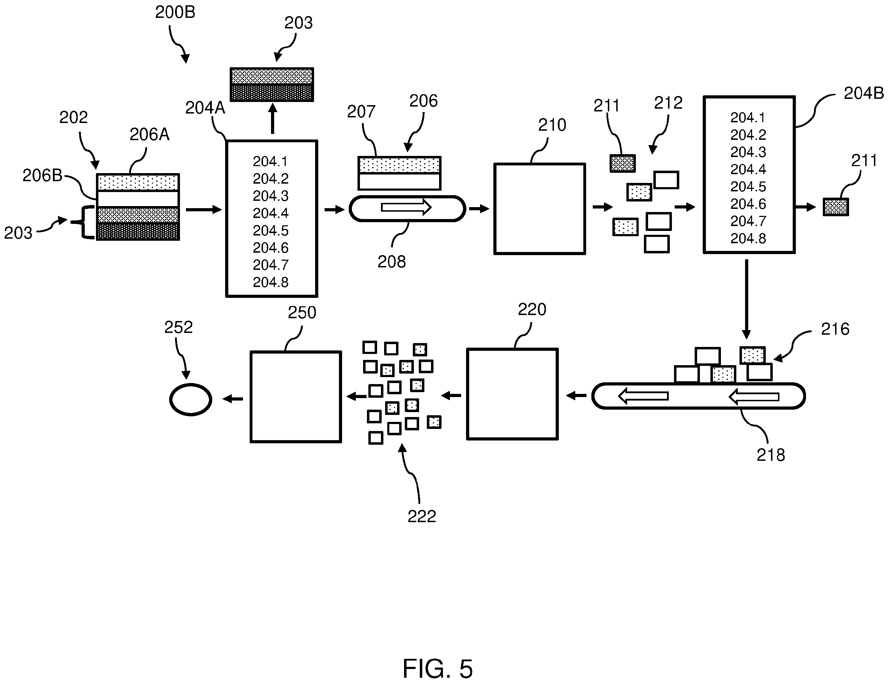

Fig. 5 shows a schematic block diagram of a pre-processing arrangement 200B in accordance with another embodiment of the invention. The pre-processing arrangement 200B is also suitable for pre-processing a foam mix 202, for example a flexible foam mix, in particular a polyurethane (PU) mix for feeding a reactor 250 of a recycling process, for instance a chemical recycling process for recovering raw materials 252. The raw materials to be recovered are typically toluene diamine (TDA) and polyols in the case of TDI-based PU foam. In the case of a MDI-based PU foam or a TDI/MDI mixed foam, then MDA is also obtained. Typically, in the recycling process, the amine is converted back to the corresponding isocyanate in a downstream step, generally after a dedicated reprocessing and purification chain.

The pre-processing arrangement 200B comprises a first sorting unit 204A that is configured to select, from the foam mix 202 that comprises one or more foam pieces 203, 206A, 206B, probably comprising different types of foam materials, those foam pieces 206A, 206B comprising target foam material 207 that is suitable for the reactor 250, and which are referred to as target foam pieces. The selection is performed by analysing the composition at at least two different non-overlapping locations. The first sorting unit 204A corresponds to the target foam selection unit 204 described with reference to Fig. 4. The foam composition determination unit 205 of the target foam selection unit 204A can comprise, for instance, a near-infrared spectroscopy device 204.1, a medium-infrared spectroscopy device 204.2, a UV-VIS spectroscopy device 204.3, an optical camera 204.4, a laser induced breakdown spectroscopy device 204.5, a Raman spectroscopy device 204.6, an X-ray fluorescence device 204.7 or a THz spectroscopy device 204.8. The foam composition determination unit 205 of the target foam selection unit 204A may also comprise two of the above mentioned devices, each configured to determine a respective one or both of the first and the second composition data.

The selected target foam pieces 206 which have been selected based on its content of target foam material 207 at two different locations L1, L2 are then transported by a first transporting unit 208 that is configured to receive the selected target foam pieces 206 and to transport the selected target foam pieces 206 to a shredding unit 210. The transporting unit 108 of Fig. 1 is exemplarily configured as a conveyor belt. The shredding unit 210 is configured to shred the selected target foam pieces 206 to form shredded foam elements 212. The shredding unit 210 may for instance comprise a cylindrical chamber with a cylindrical rotating element co-axially arranged inside the chamber to rotate along the common longitudinal axis. The rotating element has cutting and/or gripping elements distributed along its surface. The inner wall of the cylindrical chamber may also comprise cutting and/or gripping elements. A gap between the inner wall of the chamber and the rotating element allows the introduced foam piece to move. When engaged by the cutting or gripping elements, the foam pieces are cut or tore. A filtering mesh allows those shredded pieces with a predetermined size to exit the shredding unit 210. These are referred to as foam elements 212.

The foam elements 212 are provided to a second sorting unit 204B configured to select target foam elements 216 from the shredded foam elements 212. The second sorting unit can be also configured as a target foam selection unit, such as the one described with reference to Fig. 4, 204A.

Due to its position in the pre-processing arrangement 200B of Fig. 5, the second sorting unit 204B is referred to as a foam element selection unit 204B and comprises a foam composition determination unit (analogous to the foam composition determination unit 205 of Fig. 4) that is configured to perform an additional first analysis step (see 107A) for determining first composition data CD1 at a first location L1 of a sample foam element, i.e. a foam element under currently under analysis. The first composition data CD1 is indicative of a composition of the sample foam element at said location L1. It is also configured to perform an additional second analysis step (see 107B) for determining second composition data CD2 at a second non-overlapping location L2 of the sample foam element, the second composition data being indicative of the composition of the sample foam element at said second location. The foam element selection unit 204B also comprises a processing unit (analogous to the processing unit 209 of Fig. 4) configured to receive the first composition data CD1 and the second composition data CD2 and to determine that sample foam element is a target foam element 216 when both the first composition data CD1 and the second composition data CD2 are indicative of target foam 207.

Since the target foam pieces 206 may still comprise foam material 211 other that the suitable target foam material 207, some of the shredded foam elements that undergo the analysis of the second sorting unit may not qualify as target foam elements 216 and are separated.

As in the case of the first sorting unit 204A, the second sorting unit 204B can comprise, for instance, a near-infrared spectroscopy device 204.1, a medium-infrared spectroscopy device 204.2, a UV-VIS spectroscopy device 204.3, an optical camera 204.4, a laser induced breakdown spectroscopy device 204.5, a Raman spectroscopy device 204.6, an X-ray fluorescence device 204.7 or a THz spectroscopy device 204.8. The first sorting unit 204A does not have to be the same type of device as the second sorting unit 204B.

A second transporting unit 218 is configured to receive the selected target foam elements 216 and to transport the selected target foam elements 216 to a milling unit 220. The milling unit 220 is configured to mill the selected target foam elements 216 to form target foam flakes 222 that are suitable, both in size and in composition, to be fed to the reactor 250.

The milling unit and the shredding unit can be based on a similar technology, although the average size of the target foam flakes is smaller than the average size of the shredded foam elements. For instance, the shredded foam elements can have a maximum dimension in the range between 150 and 100 nm. The target foam flakes can have a maximum dimension smaller than 120 mm preferably smaller than 90 mm even more preferable smaller than 70 mm.

The arrangements 200, and 200B can be configured as pre-processing arrangements for pre-processing a mattress mix as a foam mix.

Fig. 6A shows a schematic block diagram of an exemplary target foam selection unit 204A or foam element selection unit 204B in accordance with a sixth embodiment of the invention.

The target foam selection unit 204A or foam element selection unit 204B comprise a foam composition determination unit 205 that configured to determine (see steps 102A or 107A) first composition data CD1 at a first location L1 of a sample foam piece 202C or of a sample foam element 212B. Again, the first composition data CD1 is indicative of a composition of the corresponding sample foam piece 202C or element 212B under analysis at said location L1. The composition determination unit determination unit 205 is also configured to determine (see steps 102B or 107B) second composition data CD2 at a second non-overlapping location L2 of the sample foam piece 202C or element 212B, where the second composition data CD2 is indicative of the composition of the sample foam piece 202C or element 212C under analysis. The first and second composition data CD1 and CD2 are sent to the processing unit 209, which is configured to receive the first composition data CD1 and the second composition data CD2 and to determine that sample foam piece 202C or the sample foam element 212B is a target foam piece 206 or a target foam element 216, when both the first composition data CD1 and the second composition data CD2 are indicative of target foam 207.

In the exemplary case shown in Fig. 6A, composition determination unit 205 can be additionally configured to determine third composition data CD3 indicative of the composition of the sample foam piece 202C or the sample foam element 212B at a third non-overlapping location L3, different than the first location L1 and the second location L2, and also to provide the third composition data CD3 to the processing unit 209. The processing unit is then optionally configured to select the sample foam piece or sample foam element as target foam piece or target foam element based on the first, the second and the third composition data CD1, CD2, CD3, when all three composition data are indicative of the target foam material.

This is particularly advantageous for filtering out or sorting out composite foam pieces or elements that comprise a section made of a material that is not suitable for the reactor. In Fig. 6A, the analysis locations L1 and L2 correspond to locations of the sample foam piece or sample foam element where the composition data CD1 and CD2 is indicative of the target foam material. However, the sample foam piece or sample foam element comprises a section (indicated as a darker area). The inclusion of a third location L3 for analysing the composition of the sample foam piece or sample foam element, increases the reliability of the selection process and reduces the risk of feeding an unsuitable foam material to the reactor.

The composition determination unit 205 can for instance be selected from a group consisting of a near-infrared spectroscopy device, a medium-infrared spectroscopy device, a UV-VIS spectroscopy device, an optical camera, a Raman spectroscopy device, a THz spectroscopy device, a laser induced breakdown spectroscopy device and an X-ray fluorescence device.

Fig. 6B shows a schematic block diagram of another exemplary target foam selection unit foam element selection unit 204C, which comprises a first composition determination unit 205a configured to determine the first composition data CD1 at the first location L1 and a second composition determination unit 205b configured to determine the second composition data CD2. The first composition determination 205a unit and/or the second composition determination unit 205b can be selected from a group consisting of a near-infrared spectroscopy device, a medium-infrared spectroscopy device, a UV-VIS spectroscopy device, an optical camera, a Raman spectroscopy device, a THz spectroscopy device, a laser induced breakdown spectroscopy device and an X-ray fluorescence device.

The first composition determination 205a unit and the second composition determination unit 205b of Fig. 6B are included in a common device and configured to provide the first and the second composition data CD1 CD2 to the processing unit 209, which is also integrated in the same device. Alternatively, (not shown) the first composition determination 205a unit and the second composition determination unit 205b are to independent devices, which provide the respective composition data to the processing unit, via a wired or a wireless communication channel.

Fig. 6B shows again the advantage of determining and providing second composition data CD2 indicative of the composition at a second location L2, especially in the case of sample foam pieces or sample foam elements that have a composite composition (as indicated by the different shaded regions), where part of the piece or element comprises a foam material does is not suitable for the chemical process.

In summary, the invention is directed to a method for selecting, from a foam mix comprising one or more foam pieces, target foam pieces that comprise target foam material that is suitable for a predetermined recycling process, the method comprising the steps of determining first composition data indicative of a composition of a sample foam piece at the first location, determining second composition data indicative of the composition of the sample foam piece at a non-overlapping second location different than the first location; and selecting the sample foam piece as a target foam piece upon determining that the first composition data determined at the first location and the second composition data determined at the second location are indicative of the target foam material.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Method (102) for selecting, from a foam mix (202) comprising one or more foam pieces, target foam pieces (206) that comprise target foam material (207) that is suitable for a predetermined recycling process, the method comprising the steps of:
- determining (102a) first composition data (CD1) indicative of a composition of a sample foam piece (202C) at a first location (L1) by means of an analysis-setting:
- determining (102b) second composition data (CD2) indicative of the composition of the sample foam piece (202C) at a non-overlapping second location (L2) different than the first location (L1) by means of an analysis-setting; and
- selecting (102c) the sample foam piece (202C) as a target foam piece (206) upon determining that the first composition data (CD1) determined at the first location (L1) and the second composition data determined at the second location (CD2) are indicative of the target foam material (207).

2. The method (100, 100b, 100c) of claim 1, further comprising determining respective composition data (CD1, CD2, CD3) indicative of a composition of the sample foam piece (202C) at three or more different non overlapping locations (L1, L2, L3) and selecting the sample foam piece (202C) as a target foam piece (206) upon determining that all determined composition data (CD1, CD2, CD3) is indicative of target foam material (207).

3. The method (100, 100b, 100c) of claim 1 or 2, wherein the determination of the first composition data and the second composition data is performed using one or more of optical sorting methods.

4. The method (100, 100b, 100c) of claim 3, wherein the one or more optical sorting methods is selected from the group consisting of a near-infrared spectroscopy based method, a medium-infrared spectroscopy based method, a UV-VIS spectroscopy based method, an optical camera based method, a Raman spectroscopy based method, a THz spectroscopy based method, and a laser induced breakdown spectroscopy method.

5. The method (100, 100b, 100c) of claim 3 or 4, wherein the determination of the first composition data and of the second composition data is performed using a hand held near infrared spectroscopy device (204).

6. The method (100, 100b, 100c) of any of the preceding claims, wherein the determination (102a) of the first composition data (CD1) at the first location (L1) and the determination (102b) of the second composition date (CD2) at the second location (L2) are performed using two different optical sorting methods.

7. Method for pre-processing a foam mix (202) for feeding a reactor (250) of a predetermined recycling process, the method comprising the steps of:
- performing the method of any of the preceding claims 1 to 6 for selecting target foam pieces from the foam mix;
- transporting (104) the selected target foam pieces (206) to a shredding unit (210);
- shredding (106), at the shredding unit (210), the selected target foam pieces (206) to form shredded foam elements (212); and optionally
- feeding (108) the shredded foam elements (222) to the reactor (250) for recovering raw materials (252);
or comprising the steps of:
- transporting the foam mix (202) comprising one or more foam pieces to a shredding unit (210);
- shredding (106), at the shredding unit (210), the foam pieces to form shredded foam elements (212);
- performing the method of any of the preceding claims 1 to 6 on the shredded foam elements for selecting shredded target foam elements upon determining that the composition data (CD1, CD2) obtained at a first location (L1) of the shredded foam element and at a second location (L2) of the shredded foam element is indicative of the target foam material (207); and optionally
- feeding (108) the selected shredded target foam elements (222) to the reactor (250) for recovering raw materials (252);
or comprising the steps of:
- performing the method of any of the preceding claims 1 to 6 for selecting target foam pieces from the foam mix;
- transporting (104) the selected target foam pieces (206) to a shredding unit (210);
- shredding (106), at the shredding unit (210), the selected target foam pieces (206) to form shredded foam elements (212);
- performing the method of any of the preceding claims 1 to 6 on the shredded foam elements for selecting shredded target foam elements upon determining that the composition data (CD1, CD2) obtained at a first location (L1) of the shredded foam element and at a second location (L2) of the shredded foam element is indicative of the target foam material (207); and optionally;
- feeding (108) the selected shredded target foam elements (222) to the reactor (250) for recovering raw materials (252).

8. Pre-processing arrangement (200, 200b, 200c) for pre-processing a foam mix for feeding a reactor of a recycling process for recovering raw materials, the pre-processing arrangement (200) comprising at least one target foam selection unit (204, 204b) configured to select, from the foam mix (202), target foam pieces (206a, 206b) comprising target foam (207) that is suitable for the reactor (250), the target foam selection unit comprising:
- a foam composition determination unit (205) configured to determine first composition data indicative of the composition of a sample foam piece (206c) at a first location (L1) and configured to determine second composition data indicative of the composition of the sample foam piece at a non-overlapping second location; and
- a processing unit configured (209) to receive the first composition data and the second composition data and to determine that sample foam piece is a target foam piece when both the first composition data and the second composition data are indicative of target foam.

9. The pre-processing arrangement of claim 8, further comprising:
- a transporting unit (208) configured receive the selected target foam piece (206) and to transport the selected target foam pieces (206) to a shredding unit (210); wherein
- the shredding unit (210) is configured to shred the selected target foam pieces (206) to form shredded foam elements (212) for feeding to the reactor.

10. The pre-processing arrangement of claim 9, comprising a foam element selection unit (204B) that is configured to select, from the shredded foam elements (212), shredded target foam elements (216) comprising target foam (207) that is suitable for the reactor (250).

11. The pre-processing arrangement of claim 10, wherein the foam element selection (204B) unit comprises:
- a foam composition determination unit (205) configured to determine first composition data (CD1) indicative of the composition of a sample foam element (212b) at a first location (L1) and configured to determine second first composition data (CD2) indicative of the composition of the sample foam element (212b) at a non-overlapping second location (L2); and
- a processing unit (209) configured to receive the first composition data (CD1) and the second composition data (CD2) and to determine that sample foam element (212b) is a target foam element (216) when both the first composition data (CD1) and the second composition data (CD2) are indicative of target foam (207).

12. The pre-processing arrangement of claim 8 or 11, wherein the foam element selection unit (204B) and/or foam composition determination unit (205) comprises:
- a first composition determination unit (205a) configured to determine the first composition data (CD1) at the first location (L1); and
- a second composition determination unit (205b) configured to determine the second composition data (CD2) at the non-overlapping second location (L2).

13. The pre-processing arrangement of any of the claims 8, 11 or 12, wherein the foam composition determination unit (205) and/or the first composition determination (205a) unit and/or the second composition determination unit (205b) is or are selected from a group consisting of a near-infrared spectroscopy device (204.1), a mid-infrared spectroscopy device (204.2), a UV-VIS spectroscopy device (204.3), an optical camera (204.4), a laser induced breakdown spectroscopy device (204.5), Raman spectroscopy device (204.6), an X-ray fluorescence device (204.7) and a THz spectroscopy device (204.8).

14. Computer program comprising instructions which, when executed by a control unit of a pre-processing arrangement cause the pre-processing arrangement to perform the method of any of the preceding claims 1 to 7.
